# FASCICULE DE BREVET EUROPEEN

(11) **EP 3 307 576 B1**
(45) Date de publication et mention de la délivrance du brevet: **28.08.2019**
(21) Numéro de dépôt: 16733653.6
(22) Date de dépôt: 02.06.2016
(51) Int. Cl.: B60J 5/10, B60J 10/84, E05F 1/10

(54) **ENSEMBLE D'UNE CAISSE EN BLANC DE VÉHICULE AUTOMOBILE ET D'UN HAYON COMPORTANT UN VÉRIN EN ZONE SÈCHE**
ANORDNUNG EINER ROHKAROSSERIE EINES KRAFTFAHRZEUGS UND LUKE MIT EINEM ZYLINDER IN EINER TROCKENEN ZONE
ASSEMBLY OF A BODY IN WHITE OF A MOTOR VEHICLE AND A HATCH COMPRISING A CYLINDER IN A DRY ZONE

(30) Priorité: 12.06.2015 FR 1555378
(43) Date de publication de la demande: 18.04.2018
(73) Titulaire: Compagnie Plastic Omnium, 69007 Lyon (FR)
(72) Inventeur: LETERRIER, Franck, 69800 Saint Priest (FR); HACHE, Bertrand, 07430 Saint Cyr (FR)
(74) Mandataire: LLR
(86) Numéro de dépôt international: PCT/FR2016/051310
(87) Numéro de publication internationale: WO 2016/198765

(56) Documents cités:
- DE-A1-102014 213 544
- FR-A1- 2 863 210

## Description

La présente invention concerne le domaine technique des ouvrants arrière de véhicule automobile du type hayon. En particulier, l'invention se rapporte à un hayon munis de vérins reliés à la caisse en blanc d'un véhicule automobile et permettant l'ouverture assistée du hayon.

On connaît, dans l'état de la technique, un hayon composé essentiellement d'une peau extérieure et d'un caisson rigide (ou doublure intérieure), se composant d'une partie supérieure comportant une ouverture prévue pour accueillir une lunette arrière, et d'une partie inférieure dont la zone centrale comporte des éléments techniques.

Les parties supérieure et inférieure sont reliées entre elles par l'intermédiaire de deux montants latéraux entre lesquels est généralement prévue une ouverture destinée à accueillir la lunette.

Un tel montant latéral, lorsqu'il est réalisé en tôle, constitue un profilé à section transversale fermée de façon, entre autre, à ne pas interrompre la piste de collage de la lunette.

On connaît aussi, par exemple de la demande WO2009056775, un montant réalisé en matière plastique. Dans ce cas, le montant peut constituer un profilé à section transversale ouverte, de type en U comprenant un fond et deux parois latérales, dont l'ouverture est tournée vers la lunette, et sur lequel est collée la lunette arrière, de sorte que le hayon forme à cet endroit un corps creux de rigidification.

La demande DE 10 2014 213 544 divulgue un hayon muni de vérins reliés à la caisse en blanc.

Il est connu de monter mobile le hayon sur la caisse en blanc du véhicule entre une position ouverte et une position fermée. Le hayon est relié à la caisse en blanc par l'intermédiaire de charnières placées dans la zone supérieure du hayon et par des vérins, situés de chaque côté du hayon et permettant d'assister l'ouverture et la fermeture de celui-ci.

En position fermée, le hayon vient se fermer sur la caisse en blanc du véhicule de façon étanche. Pour ce faire, la caisse en blanc, ou éventuellement le hayon, comporte un moyen d'étanchéité, tel qu'un joint périphérique.

Au niveau des montants, ce joint est de préférence situé entre une zone en creux de la caisse et la paroi de fond du montant, de façon à ne pas être visible en position fermée du hayon. Ce joint est positionné entre la caisse en blanc et une paroi (le fond) du montant sensiblement parallèle à la lunette. Ainsi, ce joint est chaussé sur la feuillure de joint. On appelle feuillure de joint l'élément issu de la caisse en blanc et qui permet de recevoir le joint d'étanchéité. On appelle piste d'étanchéité une zone de la paroi d'appui, perpendiculaire à la feuillure, et sur laquelle le joint est susceptible de s'écraser. Généralement, la feuillure est une forme en saillie de la surface portant la feuillure et perpendiculaire à la piste d'étanchéité (surface de contact entre le joint et une paroi d'appui). Le fond du corps creux représente alors la zone d'appui du joint de feuillure et est continue. En position fermée, le joint chaussé sur la feuillure vient s'écraser sur la piste d'étanchéité.

En position fermée, le montant et la caisse définissent ainsi deux zones adjacentes, séparés par une piste d'étanchéité : une zone sèche, vers le centre du hayon, et une zone humide vers l'extérieur du hayon. La zone sèche est rendue étanche par le joint. La zone sèche est également appelée « zone étanche».

Le vérin est alors placé dans la zone humide, car pour des raisons essentiellement esthétiques il n'est pas possible de l'intégrer dans l'habitacle (zone sèche), et pour des raisons techniques, il n'est pas possible de l'intégrer dans le montant latéral car celui-ci constitue un profilé à section fermée dans le cas d'un hayon en tôle, ou un profilé à section ouverte mais recouverte par la lunette (ce volume étant donc inaccessible ou inexploitable pour y loger un vérin).

Le vérin est donc soumis aux conditions extérieures, défavorables à son fonctionnement à long terme, comme l'humidité et la poussière et le vérin est visible (organe inesthétique) en position ouverte. Cette position du vérin en zone humide, rapproche le montant du plan Y0 du véhicule, et donc restreint le champ de vision vers l'arrière au travers de la lunette.

L'invention a pour but de remédier à ces inconvénients en fournissant un ensemble d'une caisse en blanc de véhicule automobile et d'un hayon dans lequel la piste d'étanchéité entre la caisse et le hayon est déportée au plus près de l'extrémité externe de la lunette, de façon à réduire l'encombrement latéral et donc d'augmenter la vision arrière, et de positionner le moyen d'assistance en zone sèche sans cependant qu'il soit visible depuis l'habitacle en position fermée du hayon.

Ainsi l'objet de l'invention concerne un ensemble d'une caisse en blanc de véhicule automobile et d'un hayon monté mobile sur la caisse entre une position ouverte et une position fermée, comportant un moyen d'assistance à l'ouverture du hayon, et un moyen d'étanchéité permettant de définir une zone sèche entre la caisse et le hayon. Ledit hayon comporte au moins un montant latéral, reliant une partie supérieure et une partie inférieure du hayon, et sur lequel peut être rapportée une lunette.

Selon l'invention, le moyen d'assistance est contenu dans la zone sèche, et le montant constitue un profilé à section transversale ouverte en H comportant au moins une ouverture tournée vers la caisse en blanc et contenue dans ladite zone sèche.

Cette position du vérin dans le montant permet notamment de protéger le moyen d'assistance des conditions extérieures, et d'éloigner le montant du plan Y0 du véhicule, et donc d'augmenter le champ de vision vers l'arrière au travers de la lunette.

De préférence, au moins l'un des premier et second moyens de fixation est positionné dans ladite zone sèche.

Le premier moyen de fixation peut être fixé sur l'une des faces tournées vers l'ouverture du profilé.

Selon l'invention, le moyen d'assistance à l'ouverture du hayon peut être un vérin ou un système motorisé.

De façon avantageuse, au moins l'un des premier et second moyens de fixation comporte une pièce de liaison sensiblement perpendiculaire à l'axe du vérin, la pièce de liaison comportant à une extrémité une forme convexe apte à coopérer avec une partie concave du vérin.

Selon l'invention, le montant comporte localement un garnissage permettant de fermer localement l'ouverture du profilé tournée vers la caisse, au niveau du moyen de fixation du moyen d'assistance au hayon.

Avantageusement, le montant comporte une paroi sensiblement perpendiculaire à une feuillure portant le moyen d'étanchéité, la paroi étant située en dehors de l'ouverture, et servant d'appui au moyen d'étanchéité.

La caisse peut comporter un élément permettant de positionner le moyen de fixation à la caisse de façon à ce que l'axe défini par les moyens de fixation correspond à l'axe souhaité pour le moyen d'assistance une fois en place.

La caisse peut également comporter un cache, permettant de masquer l'ouverture depuis l'intérieur du véhicule, lorsque le hayon est en position fermée.

Enfin, selon un mode de réalisation préféré, le hayon est en matière plastique, notamment en matière thermodurcissable ou thermoplastique renforcée, telle que le polypropylène renforcé de fibres de verre.

L'invention sera mieux comprise à la lecture des figures annexées, qui sont fournies à titre d'exemples et ne présentent aucun caractère limitatif, dans lesquelles :
- la figure 1 illustre une vue de profil d'un mode de réalisation d'un ensemble, selon l'invention, d'une caisse en blanc de véhicule automobile et d'un hayon en position ouverte.
- la figure 2 illustre une coupe transversale d'un mode de réalisation d'un ensemble, selon l'invention, d'une caisse en blanc de véhicule automobile et d'un hayon en position fermée.
- la figure 3 illustre une vue depuis l'arrière (du véhicule), d'un mode de réalisation d'un ensemble, selon l'invention, d'une caisse en blanc de véhicule automobile et d'un hayon en position fermée.
- les figures 4A, 4B et 4C illustrent des schémas selon trois coupes transversales (A, B, C), repérées sur la figure 3, d'un montant latéral du hayon de l'ensemble selon l'invention ;
- les figures 5A et 5B illustrent un moyen de fixation du moyen d'assistance à l'ouverture du hayon, sur le hayon ou sur la caisse.
- La figure 6 illustre l'augmentation de la vision arrière en utilisant un montant ayant un profilé en H par rapport à un montant ayant un profilé en U.

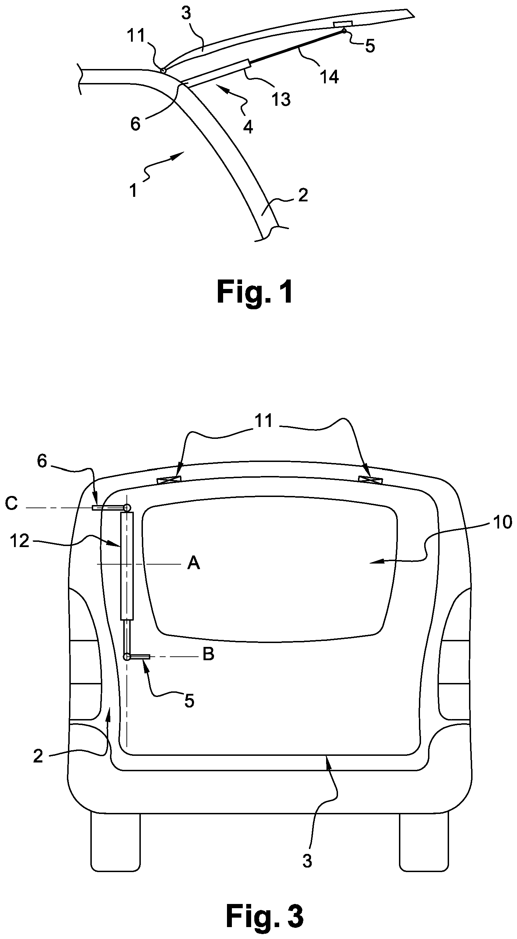

On se réfère maintenant à la figure 1, qui illustre un mode de réalisation de l'ensemble 1 d'une caisse en blanc 2 de véhicule automobile et d'un hayon 3 selon l'invention.

Le hayon 3 est monté mobile sur la caisse 2 entre une position ouverte et une position fermée.

L'ensemble comporte un moyen d'assistance 4 à l'ouverture du hayon (vérin, système motorisé, ...). Ce moyen d'assistance est fixé au hayon 3 par un premier moyen de fixation 5, et fixé à la caisse 2 par un second moyen de fixation 6.

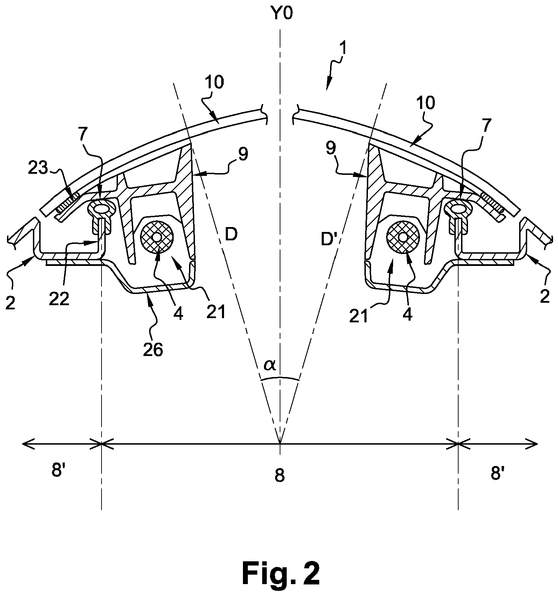

Comme l'illustre la figure 2, l'ensemble 1 comporte également un moyen d'étanchéité 7 permettant d'établir une zone sèche 8 entre la caisse 2 et le hayon 3. Cette zone sèche est encadrée par deux zones humides 8'.

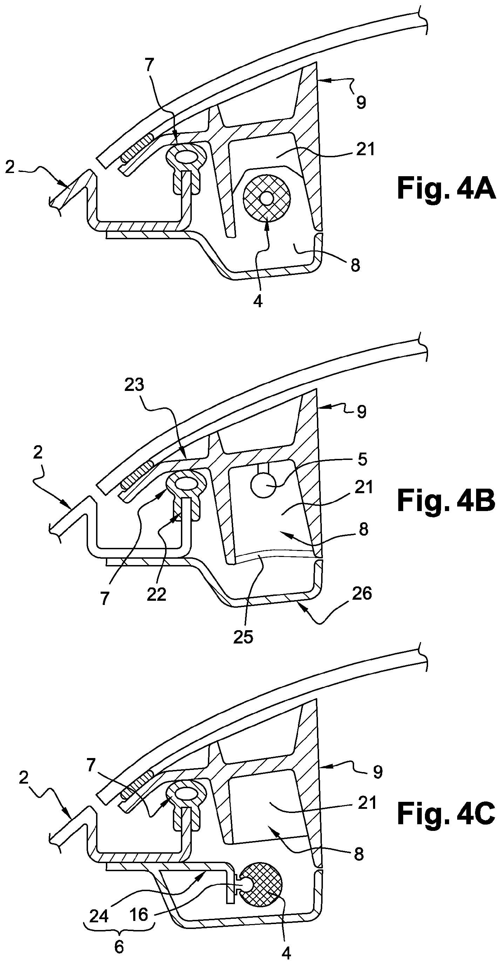

Selon l'invention, et comme l'illustre les figures 2 et 4A à 4C, le moyen d'assistance 4 est contenu dans la zone sèche 8. Le moyen d'assistance 4 est ainsi protégé des agressions extérieures aux véhicules dues aux conditions (pluie, humidité, poussières, sables...).

De préférence, et comme l'illustre les figures 4B et 4C, au moins l'un des premier et second moyens de fixation 5 et 6 est positionné dans la zone sèche 8.

Selon l'invention, au moins l'un des moyens de fixation 5 et 6 peut être partiellement à l'intérieur de la zone sèche 8, par exemple lorsqu'il est lui-même fixé de part et d'autre d'une paroi délimitant la zone sèche de la zone humide 8'. De préférence, les deux moyens de fixation 5 et 6 sont positionnés totalement dans la zone sèche 8.

Selon un exemple, le hayon 3 est composé d'une peau extérieure, constituant un panneau et intégrant en totalité ou en partie certains des équipements extérieurs visibles depuis l'extérieur du véhicule, et d'un caisson rigide, appelé également doublure intérieure. De préférence le panneau et le caisson sont réalisés en matière plastique, notamment en matière thermodurcissable ou thermoplastique renforcée, telle que le polypropylène renforcé de fibres de verre.

Selon un exemple de réalisation (figures 1 et 3), le hayon 3 mobile est relié à la caisse 2 en blanc par l'intermédiaire de charnières 11 placées dans la zone supérieure du hayon 3 et par des vérins 12, situés de chaque côté du hayon 3 et permettant d'assister l'ouverture de celui-ci. Un vérin constitue un moyen d'assistance 4 à l'ouverture du hayon.

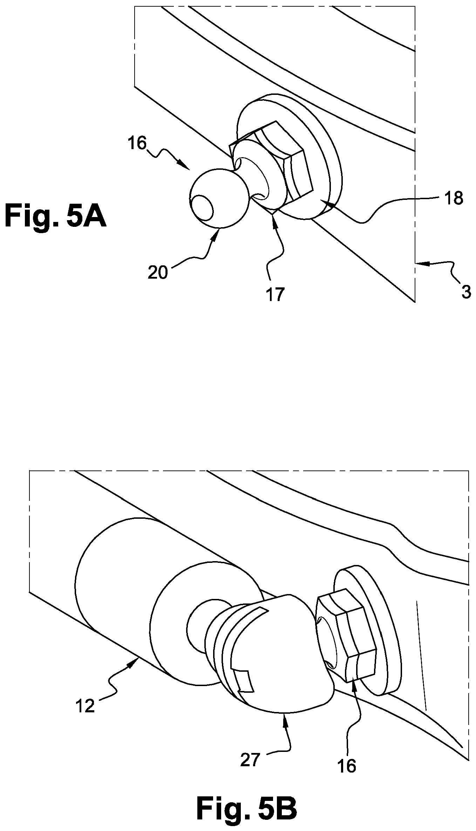

Le premier moyen de fixation 5 (figure 4B), permettant de fixer le vérin 12 au hayon 3, et/ou le second moyen de fixation 6 (figure 4C), permettant de fixer le vérin à la caisse 2, peut être constitué d'une pièce de liaison 16 sensiblement perpendiculaire à l'axe du vérin. Comme on le voit sur la figure 5A, la pièce de liaison 16 comprend par exemple : une rotule 20 formant une forme convexe telle qu'une sphère, supportée par un corps 17, reposant lui-même sur une embase. Cette dernière peut se terminer par une partie filetée par exemple, de façon à être fixée sur le montant ou la caisse.

Comme illustré sur la figure 5B, Une extrémité du vérin comporte une forme concave (27) destinée à venir coopérer avec la rotule 20 portée par la pièce de liaison 16, par exemple en se clipsant sur celle-ci.

La pièce de liaison 16 peut être fixée à la caisse/hayon par vissage ou rivetage par exemple. Une pièce de renfort, telle qu'une plaque métallique 18, peut être positionnée sur la caisse/hayon au niveau de cette zone de fixation de la pièce de liaison 16.

Selon l'invention, le caisson se compose d'une partie supérieure comportant une ouverture prévue pour accueillir une lunette arrière, et d'une partie inférieure dont la zone centrale comporte des éléments techniques. Les parties supérieure et inférieure sont reliées entre elles par l'intermédiaire de deux montants latéraux 9 entre lesquels est prévue l'ouverture destinée à accueillir la lunette 10.

Le montant 9 est de préférence réalisé en matière plastique, notamment en matière thermodurcissable ou thermoplastique renforcée, telle que le polypropylène renforcé de fibres de verre.

On se réfère maintenant aux figures 2 et 4A à 4C, qui illustrent un mode de réalisation préféré d'un montant 9 selon l'invention. Ces figures représentent une section transversale d'un montant 9. Selon ce mode de réalisation, le montant 9 constitue un profilé à section transversale ouverte comportant au moins une ouverture 21 tournée vers la caisse en blanc 2 et contenue dans la zone sèche 8. Le premier moyen de fixation 5 est fixé sur l'une ou l'autre des faces tournées vers l'ouverture 21 du profilé.

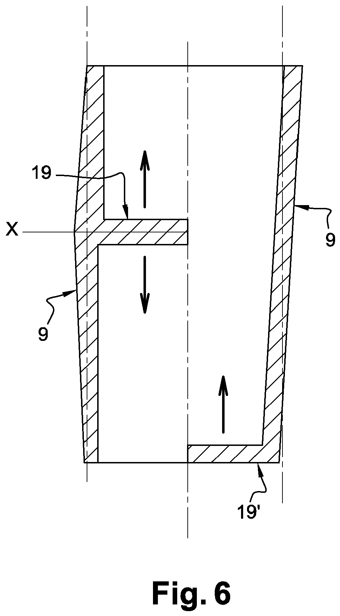

Le montant 9 constitue un profilé à section transversale ouverte, de type en H (figures 2 et 4A à 4C et la partie gauche de la figure 6). Le profilé comporte ainsi une âme 19 sensiblement parallèle à la lunette. Cette âme 19 relie deux parois latérales sensiblement parallèles entre elles, formant un profilé en H. Dans ce cas l'une des ouvertures 21 est tournée vers la caisse, l'autre ouverture est tournée vers la lunette de sorte que le montant forme à cet endroit un corps creux de rigidification.

Cette configuration en H permet d'augmenter la vision arrière. On appelle vision arrière l'angle α de vision à travers la lunette arrière depuis l'intérieur du véhicule. Comme illustré sur la figure 2, on peut mesurer cet angle en Y0, au niveau du rétroviseur intérieur : l'angle mesuré est alors l'angle entre la droite D partant du centre du rétroviseur intérieur et tangent par l'intérieur à un montant, et la droite D' partant du centre du rétroviseur intérieur et tangent par l'intérieur à l'autre montant.

La partie droite de la figure 6, illustre un montant constituant un profilé à section transversale ouverte, de type en U, comprenant un fond 19' et deux parois latérales, dont l'ouverture est tournée vers la lunette 1. Comme l'illustre cette figure 6, quelle que soit la section en U ou en H, la dépouille de moulage déporte la face la plus interne (en particulier son point le plus « dépassant » par lequel passe la droite D/D') du montant vers Y0 et limite donc la vision arrière. Avec une telle configuration en H, la dépouille totale du montant 9 est réduite par rapport à la dépouille totale d'un montant constituant un profilé en U :
- sur une forme en U, la partie creuse sort du moule avec un noyau qui va du fond 19' du U jusqu'à la partie supérieure du U. La dépouille permettant le démoulage se prend donc sur toute la hauteur ;
- sur une forme en H, la partie creuse sort du moule avec deux noyaux qui vont de part et d'autre de l'âme 19. Dans ce cas, la dépouille ne se prend plus sur toute la hauteur.

En d'autres termes, la section en H permet de réaliser des parois moins évasées vers le centre du hayon (vers l'axe Y0 du véhicule), pour des propriétés mécaniques équivalentes, et une hauteur (longueur des parois latérales) équivalente.

Ainsi, l'utilisation d'un montant en H est particulièrement avantageuse, car elle permet, en position ouverte du hayon :
- de masquer, vu de côté, au moins en partie le moyen de fixation 5 et de préférence aussi une partie du vérin 12 (masqués par les parois latérales du H) ;
- de maintenir un effet de corps creux de rigidification entre le montant 9 et la lunette 10.

Afin de masquer en partie le vérin, vu de l'arrière, lorsque le hayon est en position ouverte, on ajoute, selon un mode de réalisation, un garnissage 25 permettant de fermer localement l'ouverture 21 du profilé tournée vers la caisse, comme l'illustre la figure 4B. De façon avantageuse, le garnissage 25 peut être venu de moulage avec le montant 9.

Selon un mode de réalisation, le moyen d'étanchéité 7 permettant d'établir une zone sèche 8 entre la caisse 2 et le hayon 3, est constitué d'au moins un joint disposé entre la caisse 2 et le hayon 3.

Selon un mode préféré de réalisation, la caisse 2 et/ou le hayon 3 comporte une feuillure 22 permettant de porter et maintenir le moyen d'étanchéité 7 contre la piste d'étanchéité séparant la zone humide et la zone sèche.

Le moyen d'étanchéité 7 vient en appui d'une part sur la caisse 2, et d'autre part sur le montant 9.

Selon un mode de réalisation, le montant 9 comporte une paroi 23, en extension latérale du H, sensiblement perpendiculaire à la feuillure 22, et située en dehors de l'ouverture 21, du côté de la zone humide 8'. Cette paroi sert d'appui au moyen d'étanchéité 7, et de piste de collage avec la lunette 10.

Selon un mode préféré de réalisation, la caisse 2 comporte un élément 24 permettant de positionner le moyen de fixation 6 de façon à ce que l'axe défini par les moyens de fixation 5 et 6 correspond à l'axe souhaité pour le vérin une fois en place. Notamment, cet élément 24 permet de positionner le vérin entièrement dans l'ouverture 21 du montant 9. Il s'agît par exemple d'une forme en saillie partant de la caisse 2, et portant le moyen de fixation 6. Cette forme en saillie permet de positionner ce moyen dans l'alignement du vérin une fois en place.

Selon un mode de réalisation, la caisse 2 comporte un cache 26, permettant de masquer l'ouverture 21 depuis l'intérieur du véhicule, lorsque le hayon 3 est en position fermée.

L'invention n'est pas limitée aux modes de réalisation présentés et d'autres modes de réalisation apparaîtront clairement à l'homme du métier.

Nous avons notamment représenté une configuration dans laquelle le moyen de fixation 5 est situé en bas du montant 9 en position fermée, le moyen de fixation 6 sur la caisse étant situé à l'opposé (vers le haut). Il est également possible que le moyen de fixation 5 soit situé en haut du montant en position fermée, le moyen de fixation 6 sur la caisse étant naturellement toujours situé à l'opposé (vers le bas du hayon en position fermée).

## Revendications

1. Ensemble (1) d'une caisse en blanc (2) de véhicule automobile et d'un hayon (3) monté mobile sur la caisse (2) entre une position ouverte et une position fermée, comportant un moyen d'assistance (4) à l'ouverture du hayon fixé au hayon (3) par un premier moyen de fixation (5) et fixé à la caisse (2) par un second moyen de fixation (6), et comportant un moyen d'étanchéité (7) permettant de définir une zone sèche (8) entre la caisse (2) et le hayon (3), ledit hayon (3) comportant au moins un montant (9) latéral, reliant une partie supérieure et une partie inférieure du hayon (3), et sur lequel peut être rapportée une lunette (10), **caractérisé en ce que** le montant (9) constitue un profilé à section transversale ouverte en H comportant au moins une ouverture (21) tournée vers la caisse en blanc (2) et contenue dans ladite zone sèche (8) destinée à loger le moyen d'assistance (4), et **en ce que** le moyen d'assistance (4) est contenu dans ladite zone sèche (8).

2. Ensemble (1) selon la revendication 1, dans lequel au moins l'un des premier et second moyens de fixation (5, 6) est positionné dans ladite zone sèche (8).

3. Ensemble (1) selon l'une des revendications précédentes, dans lequel le premier moyen de fixation (5) est fixé sur l'une des faces tournées vers l'ouverture (21) du profilé.

4. Ensemble (1) selon l'une des revendications précédentes, dans lequel le moyen d'assistance (4) à l'ouverture du hayon est un vérin (12) ou un système motorisé.

5. Ensemble (1) selon la revendication 4, dans lequel au moins l'un des premier et second moyens de fixation (5, 6) comporte une pièce de liaison (16) sensiblement perpendiculaire à l'axe du vérin (12), la pièce de liaison (16) comportant à une extrémité une forme convexe (20) apte à coopérer avec une partie concave du vérin (12).

6. Ensemble (1) selon l'une des revendications précédentes, dans lequel le montant (9) comporte localement un garnissage (25) permettant de fermer localement l'ouverture (21) du profilé tournée vers la caisse (2), au niveau du moyen de fixation (5) du moyen d'assistance (4) au hayon (3).

7. Ensemble (1) selon l'une des revendications précédentes, dans lequel le montant (9) comporte une paroi (23) sensiblement perpendiculaire à une feuillure (22) portant le moyen d'étanchéité (7), la paroi (23) étant située en dehors de l'ouverture (21), et servant d'appui au moyen d'étanchéité (7).

8. Ensemble (1) selon l'une des revendications précédentes, dans lequel la caisse (2) comporte un élément (24) permettant de positionner le moyen de fixation (6) à la caisse de façon à ce que l'axe défini par les moyens de fixation (5, 6) correspond à l'axe souhaité pour le moyen d'assistance (4) une fois en place.

9. Ensemble (1) selon l'une des revendications précédentes, dans lequel la caisse (2) comporte un cache (26), permettant de masquer l'ouverture (21) depuis l'intérieur du véhicule, lorsque le hayon (3) est en position fermée.

10. Ensemble (1) selon l'une des revendications précédentes, dans lequel le hayon est en matière plastique, notamment en matière thermodurcissable ou thermoplastique renforcée, telle que le polypropylène renforcé de fibres de verre.

## Patentansprüche

1. Anordnung (1) aus einer Rohkarosserie (2) eines Kraftfahrzeugs und einer Heckklappe (3), die an der Karosserie (2) beweglich montiert ist zwischen einer geöffneten Stellung und einer geschlossenen Stellung, aufweisend ein Mittel zur Unterstützung (4) beim Öffnen der Heckklappe, das an der Heckklappe (3) über ein erstes Mittel zur Befestigung (5) befestigt ist und an der Karosserie (2) über ein zweites Mittel zur Befestigung (6) befestigt ist, und aufweisend ein Abdichtungsmittel (7), das die Bildung einer trockenen Zone (8) zwischen der Karosserie (2) und der Heckklappe (3) gestattet, wobei die Heckklappe (3) wenigstens eine seitliche Säule (9) aufweist, die einen oberen Teil und einen unteren Teil der Heckklappe (3) verbindet und an der eine Heckscheibe (10) angebracht werden kann, **dadurch gekennzeichnet, dass** die Säule (9) ein Profil mit H-förmig geöffnetem Querschnitt bildet, der wenigstens eine Öffnung (21) aufweist, die zu der Rohkarosserie (2) hin weist und in der trockenen Zone (8) enthalten ist, die zur Aufnahme des Unterstützungsmittels (4) bestimmt ist, und dass das Mittel zur Unterstützung (4) in der trockenen Zone (8) enthalten ist.

2. Anordnung (1) nach Anspruch 1, wobei wenigstens eines von dem ersten und zweiten Mittel zur Befestigung (5, 6) in der trockenen Zone (8) positioniert ist.

3. Anordnung (1) nach einem der vorhergehenden Ansprüche, wobei das erste Mittel zur Befestigung (5) an einer der zu der Öffnung (21) des Profils hin weisenden Flächen befestigt ist.

4. Anordnung (1) nach einem der vorhergehenden Ansprüche, wobei das Mittel zur Unterstützung (4) beim Öffnen der Heckklappe ein Zylinder (12) oder ein motorbetriebenes System ist.

5. Anordnung (1) nach Anspruch 4, wobei wenigstens eines von dem ersten und zweiten Mittel zur Befestigung (5, 6) ein Verbindungsteil (16) aufweist, das zu der Achse des Zylinders (12) im Wesentlichen senkrecht ist, wobei das Verbindungsteil (16) an einem Ende eine konvexe Form (20) für das Zusammenwirken mit einem konkaven Teil des Zylinders (12) aufweist.

6. Anordnung (1) nach einem der vorhergehenden Ansprüche, wobei die Säule (9) lokal eine Verkleidung (25) aufweist, die gestattet, die zu der Karosserie (2) hin weisende Öffnung (21) des Profils im Bereich des Mittels zur Befestigung (5) des Mittels zur Unterstützung (4) an der Heckklappe (3) lokal zu schließen.

7. Anordnung (1) nach einem der vorhergehenden Ansprüche, wobei die Säule (9) eine Wand (23) aufweist, die zu einem Falz (22), der das Abdichtungsmittel (7) trägt, im Wesentlichen senkrecht ist, wobei die Wand (23) außerhalb der Öffnung (21) gelegen ist und dem Abdichtungsmittel (7) als Abstützung dient.

8. Anordnung (1) nach einem der vorhergehenden Ansprüche, wobei die Karosserie (2) ein Element (24) aufweist, das gestattet, das Mittel zur Befestigung (6) an der Karosserie in der Form zu positionieren, dass die durch die Mittel zur Befestigung (5, 6) gebildete Achse der für das Mittel zur Unterstützung (4) gewünschten Achse entspricht, sobald angeordnet.

9. Anordnung (1) nach einem der vorhergehenden Ansprüche, wobei die Karosserie (2) eine Blende (26) aufweist, die das Verdecken der Öffnung (21) von innerhalb des Fahrzeugs gestattet, wenn die Heckklappe (3) in geschlossener Stellung ist.

10. Anordnung (1) nach einem der vorhergehenden Ansprüche, wobei die Heckklappe aus Kunststoff hergestellt ist, insbesondere aus verstärktem thermoplastischem oder duroplastischem Material, wie glasfaserverstärktes Polypropylen.

## Claims

1. Assembly (1) of a body in white (2) of a motor vehicle and a hatch (3) mounted on the body (2) so as to be movable between an open position and a closed position, comprising means (4) for assisting the opening of the hatch attached to the hatch (3) by a first attachment means (5) and attached to the body (2) by a second attachment means (6), and comprising sealing means (7) used to define a dry area (8) between the body (2) and the hatch (3), said hatch (3) comprising at least one lateral upright (9), connecting an upper part and a lower part of the hatch (3), and to which a window (10) can be attached, **characterised in that** the upright (9) forms an H-shaped profile with open cross-section comprising at least one opening (21) facing the body in white (2) and contained in said dry area (8), intended to house the assistance means (4), and **in that** the assistance means (4) is contained in said dry area (8).

2. Assembly (1) according to claim 1, wherein at least one of the first and second attachment means (5, 6) is positioned in said dry area (8).

3. Assembly (1) according to one of the preceding claims, wherein the first attachment means (5) is attached to one of the sides facing the opening (21) of the profile.

4. Assembly (1) according to one of the preceding claims, wherein the means (4) for assisting the opening the hatch is a cylinder (12) or a motorised system.

5. Assembly (1) according to claim 4, wherein at least one of the first and second attachment means (5, 6) comprises a connecting piece (16) substantially perpendicular to the axis of the cylinder (12), the connecting piece (16) having at one end a convex shape (20) adapted to cooperate with a concave part of the cylinder (12).

6. Assembly (1) according to one of the preceding claims, wherein the upright (9) locally comprises a trim (25) used to locally close the opening (21) of the profile facing the body (2) at the means (5) for attaching the assistance means (4) to the hatch (3).

7. Assembly (1) according to one of the preceding claims, wherein the upright (9) comprises a wall (23) substantially perpendicular to a rebate (22) carrying the sealing means (7), the wall (23) being located outside the opening (21) and acting as support for the sealing means (7).

8. Assembly (1) according to one of the preceding claims, wherein the body (2) comprises an element (24) used to position the attachment means (6) relative to the body so that the axis defined by the attachment means (5, 6) corresponds to the axis required for the assistance means (4) once in position.

9. Assembly (1) according to one of the preceding claims, wherein the body (2) comprises a cover (26) to mask the opening (21) from inside the vehicle when the hatch (3) is in the closed position.

10. Assembly (1) according to one of the preceding claims, wherein the hatch is made of plastic material, in particular reinforced thermosetting or thermoplastic material such as glass-fibre reinforced polypropylene.
